# EUROPÄISCHE PATENTSCHRIFT

(11) **EP 0 453 903 B1**
(45) Veröffentlichungstag und Bekanntmachung des Hinweises auf die Patenterteilung: **02.11.1994**
(21) Anmeldenummer: 91105840.2
(22) Anmeldetag: 12.04.1991
(51) Int. Cl.: B29C 65/14, B29C 65/30, B29L 23/22

(54) **Einrichtung zum stirnseitigen Verschweissen von Kunststoffteilen**
Apparatus for butt-welding of plastic parts
Appareil pour le soudage bout-à-bout d'éléments en plastique

(30) Priorität: 27.04.1990 DE 4013471
(43) Veröffentlichungstag der Anmeldung: 30.10.1991
(73) Patentinhaber: GEORG FISCHER AKTIENGESELLSCHAFT, CH-8201 Schaffhausen (CH)
(72) Erfinder: Haug, Peter, W-7700 Singen (DE); Wermelinger, Jörg, CH-8200 Schaffhausen (CH)

(56) Entgegenhaltungen:
- EP-A- 0 167 870
- EP-A- 0 312 712
- DE-A- 3 717 608
- DE-A- 3 741 100
- DE-U- 8 905 278

## Beschreibung

Die Erfindung betrifft eine Einrichtung zum stirnseitigen Verschweissen von Kunststoffteilen wie sie im Oberbegriff von Anspruch 1 beschrieben ist.

Durch die EP-A1-0167870 ist eine Einrichtung der eingangs genannten Art bekannt geworden. Hierbei ist ein gleichmässiges Aufheizen auf eine vorgegebene Temperatur der Stirnflächen der rohrförmigen Teile nicht möglich.

Durch die DE-U-7425376 ist ebenfalls eine Vorrichtung zum Verschweissen von Hohlprofil-Formteilen bekanntgeworden, bei welcher die Heizvorrichtung als Glühdraht ausgebildeter Wärmestrahlerzeuger linienförmig gestaltet ist.Für jeden unterschiedlichen Hohlquerschnitt muss deshalb eine speziell angepasste Heizvorrichtung verwendet werden.

Aufgabe der vorliegenden Erfindung ist die Schaffung einer Einrichtung der eingangs genannten Art, deren Heizvorrichtung zum einwandfreien Verschweissen auch von schwierig zu verschweissenden thermoplastischen Materialien wie z.B. Perfluralkoxy-Cop., Ethylen-chlortrifluorethylen-Cop., Polyvinylidenfluorid und Polyvinylchlorid geeignet ist und wobei die Heizvorrichtung für eine gleichmässige Aufheizung der zu verschweissenden Flächen unterschiedlicher Abmessungen ausgebildet ist.

Erfindungsgemäss wird diese Aufgabe durch die kennzeichnenden Merkmale von Anspruch 1 gelöst.

Besonders vorteilhafte Ausgestaltungen der Erfindung sind in den abhängigen Ansprüchen gekennzeichnet.

Die Erfindung ist in den beiliegenden Zeichnungen dargestellt und nachfolgend beschrieben.

Es zeigen:
- Fig. 1: eine Einrichtung zum stirnseitigen Verschweissen von Kunststoffteilen in perspektivisch vereinfachter Darstellung,
- Fig. 2: eine Ausführungsvariante der in Fig. 1 gezeigten Einrichtung,
- Fig. 3A bis 3D: den Arbeitsablauf beim Verschweissen von rohrförmigen Teilen mit der Einrichtung gemäss Fig. 1 und Fig. 2 in vier schematisch dargestellten Arbeitsstellungen.

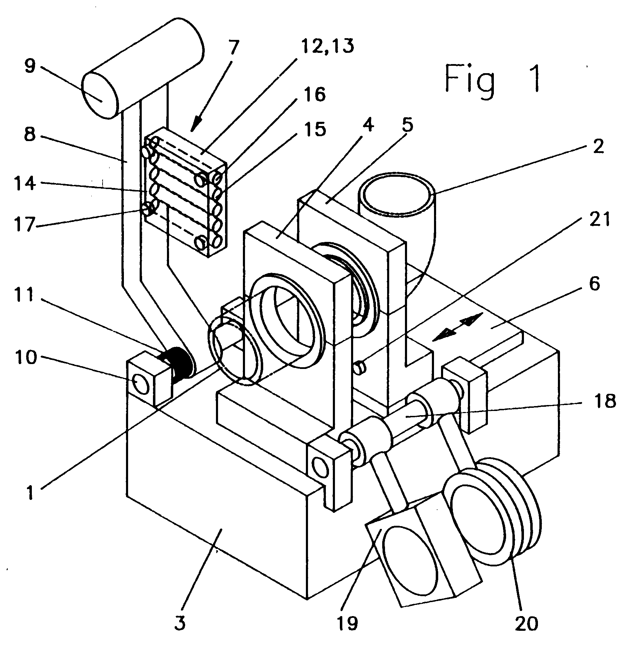

Die Fig. 1 zeigt eine Einrichtung zum stirnseitigen Verschweissen von rohrförmigen Teilen wie z.B. ein Kunststoffrohr 1 mit einem Formteil 2.

Die Einrichtung weist ein Grundgestell 3 auf, auf welchem eine fest angeordnete Spannvorrichtung 4 und eine auf einem Schlitten 6 axial verschiebbare Spannvorrichtung 5 angeordnet ist.

Eine Heizvorrichtung 7 ist an einem als schwenkbaren Hebel 8 ausgebildeten Halteteil angeordnet und mittels eines Handgriffes 9 zwischen die Enden der eingespannten rohrförmigen Teile 1, 2 einschwenkbar.

Der Hebel 8 ist auf einer Achse 10 schwenkbar und gegen den Druck einer Feder 11 axial in Richtung der feststehenden Spannvorrichtung 4 verschiebbar gelagert.

Die Heizvorrichtung 7 ist als Infrarot-Heizvorrichtung ausgebildet, wobei die stirnseitigen Enden der rohrförmigen Teile 1,2 berührungslos mittels Wärme- bzw. Infrarot-Strahlen aufgeheizt werden.

Die Heizvorrichtung 7 weist einen Heizkörper 12 aus einer mit einer Keramik-Schicht 14 versehenen Metallplatte 13 auf, welche aus Kupfer hergestellt ist. In der Metallplatte 13 sind in Bohrungen mehrere elektrisch heizbare Heizpatronen 15 angeordnet, welche eine ziemlich gleichmässige Aufheizung der Metallplatte 13 gewährleisten. Mindestens einer, vorzugsweise zwei Thermofühler 16, sind in der Metallplatte 13 angeordnet und mit einer Regeleinrichtung für die Heizvorrichtung 7 wirkverbunden. Die Metallplatte 13 ist aus Kupfer hergestellt, wodurch die Heizvorrichtung 7 durch die gute Wärmeleitfähigkeit des Kupfers rasch aufheizbar ist. Durch die Keramikschicht 14 wird die Wärme-Abstrahlungsintensität - auch Emissionsgrad genannt - erhöht, so dass ein besserer Wirkungsgrad der Heizvorrichtung erreicht wird.

Vorteilhafterweise wird die Kupferplatte vor dem Aufbringen der Keramik-Beschichtung chemisch vernickelt um einen gasdichten Schutz zu erhalten. Durch diese Vernickelung wird ein Oxidieren des Kupfers auch unter der Keramik-Schicht verhindert. Die Keramikschicht 14 weist vorzugsweise eine Dicke von 0,1 bis 0,6 mm auf und gewährleistet eine gleichmässige Abstrahlung der Wärmeenergie auf der ganzen Fläche. Ausserdem wird aufgrund der Konstruktion und den Materialien ein sehr enges Temperaturband (Temp. Differenz) an der Oberfläche der Heizvorrichtung eingehalten.

Am Heizkörper 12 sind Anschlagnocken 17 angeordnet, welche durch axiales Verschieben der Heizvorrichtung 7 zur Anlage an die Spannvorrichtungen 4, 5 bringbar sind. An der Frontseite des Grundgestells 3 ist eine Rundstange 18 befestigt, auf welcher schwenkbar und axial verschiebbar ein Anschlag 19 und ein Schneidwerkzeug 20 angeordnet sind.

Anschlag 19 und Schneidwerkzeug 20 sind zwischen die Spannvorrichtungen 4, 5 einschwenkbar, wobei das Schneidwerkzeug 20 von Hand mittels einer Ratsche oder auch motorisch antreibbar ist und Schneiden auf beiden Seiten zur Bearbeitung der stirnseitigen Enden der rohrförmigen Teile 1, 2 aufweist.

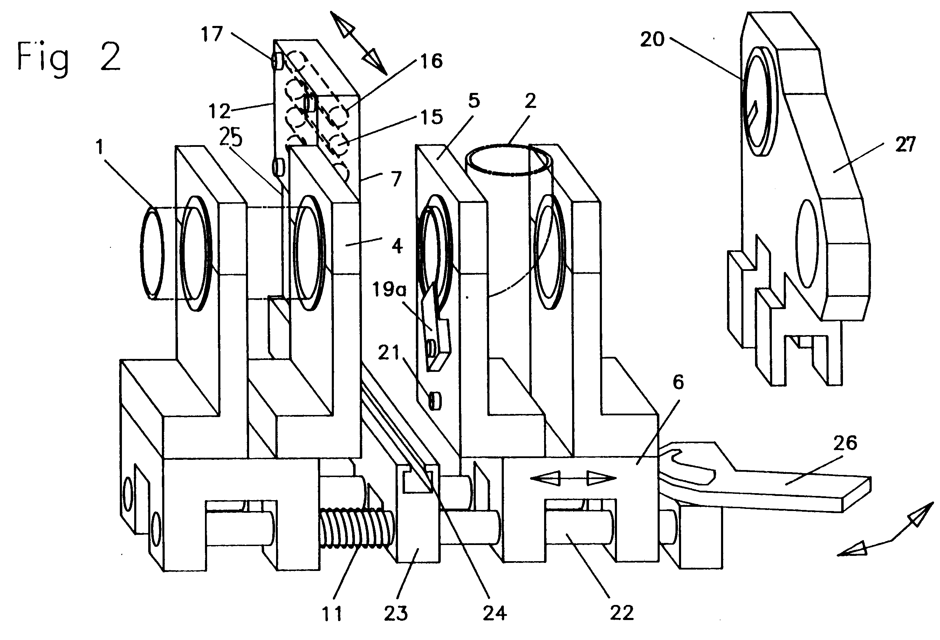

Bei der in der Fig. 2 gezeigten Ausführungsvariante ist der Schlitten 6 für die Spannvorrichtung 5 auf einer Führung 22 angeordnet, welche vorzugsweise aus zwei Rundführungsstangen besteht.

Zwischen den beiden Spannvorrichtungen 4 und 5 ist auf der Führung 22 ein auf dieser verschiebbarer Schlitten 23 mit einer Querführung 24 angeordnet. Auf dieser Querführung 24 ist ein Halteteil 25 für die Heizvorrichtung 7 entweder von Hand oder auch mechanisch mittels eines weiter nicht dargestellten Verschiebeantriebes zwischen die beiden Spannvorrichtungen einschiebbar.

Die Heizvorrichtung 7 weist, wie zu Fig. 1 bereits beschrieben, einen Heizkörper 12 mit Heizpatronen 15, Thermofühlern 16 und Anschlagnocken 17 auf.

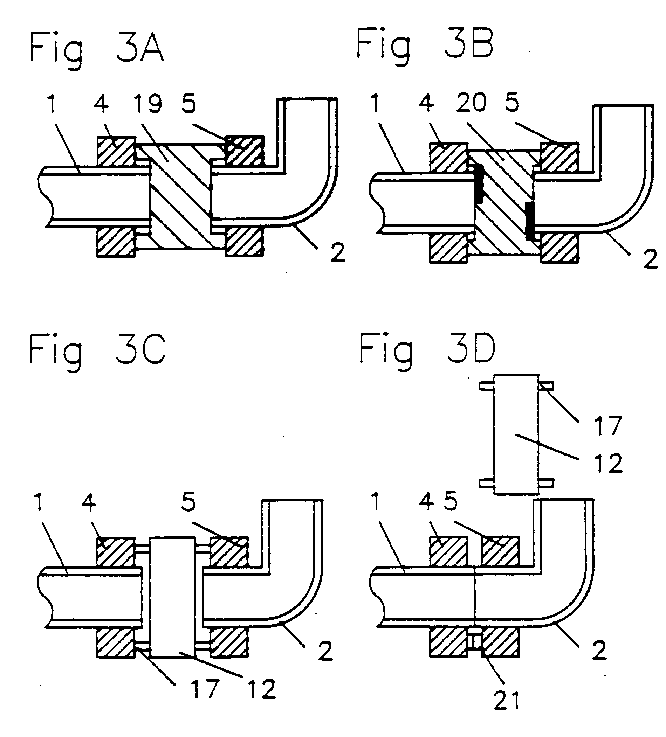

Der Schlitten 23 mit der Heizvorrichtung 7 ist in Richtung der Rohrteilachse durch Verschieben des Schlittens 6 gegen den Druck der Feder 11, wie zu Fig. 3c beschrieben, verschiebbar.

An den Stirnseiten der beiden Spannvorrichtungen sind Anschläge 19a verschwenkbar oder verschiebbar angeordnet und dienen zum Ausrichten der festzuspannenden, rohrförmigen Teile 1 und 2.

Das Schneidwerkzeug 20 ist an einem auf den Schlitten 23 aufsetzbaren Lagerteil 27 angeordnet und radial zwischen die Spannvorrichtungen 4, 5 einschiebbar.

Zum Verschieben der Spannvorrichtung 5 mit dem Schlitten 6 ist ein Hebel 26 angeordnet.

Der Ablauf des Schweisssvorganges erfolgt, wie nachfolgend beschrieben, und in den Fig. 3A, 3B, 3C und 3D dargestellt.

Zuerst muss gemäss Fig. 3A der Anschlag 19 bzw. die beiden Anschläge 19a (Fig. 2) zwischen die beiden Spannvorrichtungen 4, 5 eingeschwenkt werden. Dann können die rohrförmigen Teile 1, 2 eingespannt werden, wobei sie vor dem Festspannen axial bis zum Anschlag verschoben werden. Bei der in Fig. 1 dargestellten Einrichtung muss hierbei die auf dem Schlitten 6 verschiebbare Spannvorrichtung 5 gegen den Anschlag 19 gedrückt werden.

Nach dem erfolgten Spannen wird die verschiebbare Spannvorrichtung 5 zurückgefahren und der Anschlag 19 ausgeschwenkt. Bei der Ausführung gemäss Fig. 2 ist nur das Zurückschwenken der Anschläge 19a erforderlich.

Zum Bearbeiten der stirnseitigen Enden der rohrförmigen Teile 1, 2 wird das Schneidwerkzeug 20 eingeschwenkt bzw. radial eingeschoben (siehe Fig. 3B). Das Schneidwerkzeug 20 wird mittels der verschiebbaren Spannvorrichtung 5 an die stirnseitigen Enden der Teile 1, 2 angedrückt, wobei gleichzeitig durch Drehen des Schneidwerkzeuges 20 mittels einer Ratsche die spanende Bearbeitung der Enden auf ein Fixmass erfolgt.

Die Bearbeitung ist beendet, wenn das Schneidwerkzeug 20 an den beiden Spannvorrichtungen 4, 5 anliegt.

Nach dem Zurückfahren der verschiebbaren Spannvorrichtung 5 wird das Bearbeitungswerkzeug 20 herausgeschwenkt bzw. zurückgeschoben wobei dann die stirnseitigen Enden auf Sauberkeit und Masshaltigkeit überprüfbar sind.

Der in der Zwischenzeit aufgeheizte Heizkörper 12 wird mittels des Handgriffes 9 oder eines Antriebes zwischen die zu verschweissenden Teile 1, 2 gebracht. Durch axiales Verschieben des Schlittens 6 kommt die Spannvorrichtung 5 zur Anlage an die Anschlagnocken 17 des Heizkörpers 12, wobei die Heizvorrichtung 7 gegen den Druck der Feder 11 weiter verschoben wird, bis die Anschlagnocken 17 auf der anderen Seite des Heizkörpers 12 an der Spannvorrichtung 4 anliegen (Siehe Fig. 3C).

In dieser Stellung weisen die beiden Oberflächen des Heizkörpers 12 zu den stirnseitigen Enden der zu verschweissenden Teile 1, 2 eine für eine rasche Aufheizung festgelegte Distanz auf, so dass keine Berührung des Heizköpers 12 mit den Teilen 1, 2 erfolgt. Nach Ablauf einer eingestellten Aufheizzeit wird der Schlitten 6 schnell etwas zurückgefahren und die Heizvorrichtung 7 aus dem Schweissbereich in seine Ruhelage zurückgebracht. Dann werden die zu verschweissenden Teile durch Verschieben der Spannvorrichtung 5 gegeneinandergedrückt, wobei Anschläge 21 an den Spannvorrichtungen 4, 5 den Verfahrweg begrenzen (Siehe Fig. 3D). Durch einstellbare Anschläge 21 und Einstellbarkeit der Schweisstemperatur kann, je nach zu verschweissenden Materialien, eine optimale Schweissverbindung hergestellt werden, wobei auch möglichst kleine Schweisswülste entstehen.

Durch nicht dargestellte Antriebe für alle Bewegungen und einer Programmsteuerung ist die gesamte Einrichtung automatisierbar.

## Patentansprüche

1. Einrichtung zum stirnseitigen Verschweissen von Kunststoffteilen (1,2), insbesondere von rohrförmigen Teilen und Rohren, welche in koaxialer Lage zueinander mittels Spannvorrichtungen (4,5) gehalten und deren Enden berührungslos mittels einer Wärmestrahlen erzeugenden Heizvorrichtung (7) aufgeheizt werden, welche einen mit elektrischen Heizelementen (15) versehenen Heizkörper (12) aufweist, dadurch gekennzeichnet, dass der Heizkörper (12) eine mit Keramik (14) beschichtete, Kupferplatte (13) aufweist.

2. Einrichtung nach Anspruch 1, dadurch gekennzeichnet, dass in der Kupferplatte (13) mehrere Heizpatronen (15) und mindestens ein Thermofühler (16) angeordnet sind.

3. Einrichtung nach Anspruch 1 oder 2, dadurch gekennzeich-, net, dass die Dicke der Keramikschicht (14) 0,1 bis 0,6 mm beträgt.

4. Einrichtung nach einem der Ansprüche 1 bis 3, dadurch gekennzeichnet, dass zwischen der Platte (13) aus Kupfer und der Keramikschicht (14) eine dünne Nickelschicht angeordnet ist.

5. Einrichtung nach einem der Ansprüche 1 bis 4, dadurch gekennzeichnet, dass der Heizkörper (12) an einem zwischen die Spannvorrichtungen (4,5) einbringbaren Halteteil (25, 8) angeordnet ist, welcher in axialer Richtung der Rohrteilachse gegen den Druck einer Feder (11) verschiebbar ist.

6. Einrichtung nach einem der Ansprüche 1 bis 5, dadurch gekennzeichnet, dass am Heizkörper (12) Anschlagnocken (17) angeordnet sind, welche zur Anlage an die Stirnflächen der beiden Spannvorrichtungen (4, 5) bringbar sind.

## Claims

1. Device for the butt-welding of plastic parts (1, 2), in particular tubular parts and tubes, which are held in a coaxial position with respect to each other by means of clamping devices (4, 5) and whose ends are heated without contact by means of a heating device (7) producing heat radiation, the heating device having a heating body (12) provided with electrical heating elements (15), characterised in that the heating body (12) has a copper plate (13) coated with ceramic (14).

2. Device according to claim 1, characterised in that several heating cartridges (15) and at least one heat sensor (16) are arranged in the coppper plate (13).

3. Device according to claim 1 or 2, characterised in that the thickness of the ceramic layer (14) is 0.1 to 0.6 mm.

4. Device according to one of claims 1 to 3, characterised in that a thin nickel layer is disposed between the copper plate (13) and the ceramic layer (14).

5. Device according to one of claims 1 to 4, characterised in that the heating body (12) is arranged on a holding part (25, 8) which can be introduced in between the clamping devices (4, 5), the holding part being movable in the axial direction of the axis of the tubular part against the pressure of a spring (11).

6. Device according to one of claims 1 to 5, characterised in that stop cams (17) are arranged on the heating body (12) and can be brought to abut against the ends of the two clamping devices (4, 5).

## Revendications

1. Appareil pour le soudage bout-à-bout d'éléments en matière plastique (1, 2), en particulier de parties tubulaires et de tubes, maintenus en position coaxiale les uns par rapport aux autres au moyen de dispositifs de serrage (4, 5), leurs extrémités étant chauffées sans contact, au moyen d'un dispositif de chauffage (7) produisant un rayonnement thermique et présentant un corps chauffant (12) pourvu d'éléments chauffants (15) électriques, caractérisé en ce que le corps chauffant (12) comporte une plaque en cuivre (13), revêtue de céramique (14).

2. Appareil selon la revendication 1, caractérisé en ce que plusieurs cartouches chauffantes (15) et au moins une sonde de température (16) sont disposées dans la plaque en cuivre (13).

3. Appareil selon la revendication 1 ou 2, caractérisé en ce que l'épaisseur de la couche céramique (14) est de 0,1 à 0,6 mm.

4. Appareil selon l'une des revendications 1 à 3, caractérisé en ce qu'entre la plaque (13) en cuivre et la couche en céramique (14) est disposée une mince couche en nickel.

5. Appareil selon l'une des revendications 1 à 4, caractérisé en ce que le corps chauffant (12) est disposé sur une pièce de support (25, 8) susceptible d'être introduite entre les dispositifs de serrage (4, 5) et qui est susceptible de coulisser dans la direction axiale de l'axe de la partie tubulaire, à l'encontre de la pression exercée par un ressort (11).

6. Appareil selon l'une des revendications 1 à 5, caractérisé en ce que des ergots de butée (17), susceptible de venir en appui sur les surfaces frontales des deux dispositifs de serrage (4, 5), sont disposés sur le corps chauffant (12).
